# EUROPÄISCHE PATENTSCHRIFT

(11) **EP 4 310 379 B1**
(45) Veröffentlichungstag und Bekanntmachung des Hinweises auf die Patenterteilung: **30.09.2026**
(21) Anmeldenummer: 23185941.4
(22) Anmeldetag: 17.07.2023
(51) Int. Cl.: F16L 37/084, F16L 41/02, F16L 41/03

(54) **VERBINDUNGSSYSTEM**
A CONNECTOR SYSTEM
SYSTÈME DE CONNEXION

(30) Priorität: 19.07.2022 DE 102022116316
(43) Veröffentlichungstag der Anmeldung: 24.01.2024
(73) Patentinhaber: GEWIE Automotive GmbH, 83624 Otterfing (DE)
(72) Erfinder: Wiehler, Stefan, 83624 Otterfing (DE)
(74) Vertreter: Kilian Kilian & Partner mbB

(56) Entgegenhaltungen:
- WO-A1-2007/121794
- WO-A1-2010/009942
- DE-A1- 19 820 501
- US-A- 3 560 027

## Beschreibung

Die vorliegende Erfindung betrifft ein Verbindungssystem zur Verbindung von, insbesondere verschiedenen, Schläuchen oder Rohren, bestehend aus Verbindern mit Muffen und Steckeinsätzen, welche Nippel und Anschlüsse aufweisen, wobei die Nippel in die Muffen der Verteiler eingesteckt werden.

Derartige Verbindungssysteme sind im Handel z.B. für den Automobil- und Gartenbau wie beispielsweise bei der Pflanzenzucht erhältlich. Man spricht auch von Schlauchanschlüssen und Schlauchverteilern die je nach Ausführung als Y-Verteiler, T-Verteiler oder einfach Mehrfachverteiler genannt werden. Hierbei ist bereits der erste Nachteil der bekannten Vorrichtungen zu nennen, nämlich dass die bekannten Systeme auf vorhandene Anschlussgrößen begrenzt sind. Sie sind aufwändig, da für jede Anschlussgröße ein separater Verbinder gefertigt werden muss. Für universale Anwendungen sind sie nicht geeignet. Beispielsweise muss bei Übergängen von verschiedenen Durchmessern mit Adaptern gearbeitet werden. Dies ist insbesondere bei Verbindung von Rohren und Glattrohren sowie Wellrohren an ein und demselben Verteiler aufwändig. Die Herstellung herkömmlicher Verbinder mit festen unterschiedlichen Anschlüssen auf Kundenwunsch ist zwar möglich, jedoch sehr teuer und nur in sehr großen Stückzahlen wirtschaftlich.

Entsprechender Stand der Technik findet sich in WO2010/009942 A1.

Der Erfindung liegt eine Aufgabe zugrunde, ein Verbindungssystem vorzuschlagen, bei welchem die Nachteile aus dem Stand der Technik vermieden oder zumindest stark vermindert werden.

Die Aufgabe wird gelöst durch ein Verbindungssystem gemäß Anspruch 1, nämlich ein Verbindungssystem zur Verbindung von, insbesondere verschiedenen, Schläuchen oder Rohren, bestehend aus Verbindern, die wenigstens zwei Muffen aufweisen und Steckeinsätzen, welche Nippel und Anschlüsse aufweisen, wobei die Nippel dafür vorgesehen sind, in die Muffen der Verbinder eingesteckt zu werden, dadurch gekennzeichnet, dass die Muffen und die Nippel einander zugeordnete Verdrehsicherungen und Dichtungselemente, vorzugsweise O-Ring-Dichtungen, aufweisen und dass die Muffen und die Nippel, einander zugeordnete nach dem Einstecken nicht zerstörungsfrei lösbare gegenseitige axiale Verriegelungen aufweisen.

Das erfindungsgemäße Verbindungssystem hat den besonderen Vorteil, dass für verschiedenste Schläuche oder Rohre ein und derselbe Verbinder eingesetzt werden kann. Wobei in den erfindungsgemäßen Verbinder in dessen Muffen unterschiedliche Steckeinsätze eingesteckt werden können, welche alle gleiche Nippel aufweisen. Lediglich die Anschlüsse der Steckeinsätze sind angepasst an die jeweilige Anforderung Schlauch oder Rohr oder Wellrohr oder dergleichen. Das erfindungsgemäße Verbindungssystem hat auch den weiteren Vorteil, dass die zu verbindenden Verbinder und Steckeinsätze dicht und verdrehsicher verbunden werden können und nach dem Ineinanderstecken gegenseitig axial verriegelt sind. Dies erleichtert die Montage außerordentlich, erlaubt eine zuverlässige Betriebsweise und verringert die Kosten für eine Installation.

Das erfindungsgemäße Verbindungssystem ist dadurch gekennzeichnet, dass die Verdrehsicherungen derart ausgebildet sind, dass die Muffen im Wesentlichen kreisrunde Innenflächen aufweisen, die jedoch durch wenigstens einen radial nach innen ragenden Vorsprung unterbrochen sind und dass die Nippel im Wesentlichen kreisrunde Außenflächen aufweisen, die jedoch durch wenigstens eine radial nach innen ragende komplementäre Ausnehmung unterbrochen sind, wobei der Vorsprung in der komplementären Ausnehmung zu sitzen kommt und damit eine Verdrehsicherung bildet. Die Herstellung des erfindungsgemäßen Verbindungssystems bzw. seiner Bestandteile ist vorteilhafterweise recht kostengünstig, beispielsweise im Spritzguss herzustellen.

Das erfindungsgemäße Verbindungssystem ist derart gestaltet, dass die nicht zerstörungsfrei lösbare gegenseitige axiale Verriegelung derart ausgebildet ist, dass die Muffe einen sich axial erstreckenden zylinderförmigen wenigstens teilweise elastischen Kragen mit wenigstens einer sich radial erstreckenden Ausnehmung aufweist und der Nippel wenigstens einen sich radial erstreckenden, vorzugsweise sägezahnförmig ausgebildeten, Vorsprung aufweist, welcher beim Einstecken des Nippels in die Muffe in die Ausnehmung des teilweise elastischen Kragen gelangt, dort einrastet und damit die axiale Verriegelung der Muffen und Nippel bildet. Diese Ausführungsform erlaubt vorteilhafter Weise eine sehr schnelle Montage auch für nur angelernte Beschäftigte. Insbesondere im Gartenbau ist dies von besonderem Vorteil.

In noch einer weiteren vorteilhaften Ausbildung der Erfindung ist das Verbindungssystem mit Verbindern ausgebildet, die drei oder vier Muffen aufweisen. Diese Verbinder werden Y-, T- oder Kreuzverbinder genannt. Damit kann nahezu jede gewünschte Schlauchnetzkonfiguration gebildet werden. Sollte eine der vorhandenen Muffen nicht zum Einsatz kommen sollen, steckt man vorteilhafter Weise einen Blindstopfen in die entsprechende Muffe.

In wieder einer anderen vorteilhaften Ausbildung der Erfindung ist das Verbindungssystem dadurch gekennzeichnet, dass die Verbinder und / oder Steckeinsätze aus POM, PP, PA oder PBT gefertigt sind. Hierbei kann sehr individuell auf die jeweiligen Anforderungen des Einsatzgebietes eingegangen werden. So ist POM als Werkstoff für den Einsatz mit diversen Flüssigkeiten wie z.B. Ölen, Benzin, Diesel, Alkohol und auch Laugen bestens geeignet. PP weist eine sehr gute allgemeine Chemikalienbeständigkeit auf, ist jedoch nicht geeignet bei niedrigen/hohen Temperaturen. PA wird vorteilhaft für Flüssigkeiten wie Öl, Benzin und Diesel eingesetzt. Der Werkstoff PBT zeichnet sich durch gute Beständigkeit gegenüber Säuren, Chlor und ätzende Stoffe aus. Er ist auch gut für Druckluftanwendungen geeignet, da er eine sehr geringe Feuchtigkeitsaufnahme aufweist. Die Verbinder und / oder Steckeinsätze des erfindungsgemäßen Verbindungssystems können auch aus anderen Kunststoffen gefertigt werden.

In schließlich noch einer anderen vorteilhaften Ausbildung der Erfindung weist das erfindungsgemäße Verbindungssystem Anschlüsse auf, die als Schlauchanschluss, Wellrohranschluss, Blindstopfen oder Verbindungsrohr ausgebildet sind. Hier zeigen sich die universellen Einsatzmöglichkeiten der vorliegenden Erfindung. Es können beispielsweise auch Sensoren in den Anschlüssen angeordnet werden, wenn in einem geschlossenen System zum Beispiel der Druck gemessen werden soll. Der Verbinder bleibt bei dem erfindungsgemäßen System immer der gleiche. Lediglich der Steckeinsatz folgt den individuellen Bedürfnissen.

Um die Erfindung weiter zu erläutern und zu erklären wird sie im Folgenden unter Zuhilfenahme einer Zeichnung kurz beschrieben.
- Fig. 1 zeigt: schematisch in Draufsicht links einen Steckeinsatz und rechts daneben angeordnet einen kreuzförmigen Verbinder mit vier Muffen eines Ausführungsbeispiels eines erfindungsgemäßen Verbindungssystems vor dem Einstecken.
- Fig. 1a zeigt: schematisch die Darstellung gemäß der Schnittlinie A-A von Fig. 1 im Schnitt.
- Fig. 2 zeigt: schematisch in Draufsicht einen Steckeinsatz, eingesteckt von der linken Seite in eine Muffe eines rechts daneben dargestellten Verbinders eines Ausführungsbeispiels eines erfindungsgemäßen Verbindungssystems (nach dem Einstecken).
- Fig. 2a zeigt: schematisch die Darstellung gemäß der Schnittlinie A-A von Fig. 2 im Schnitt.
- Fig. 2b zeigt: schematisch die Darstellung von Fig. 2 in Perspektive.
- Fig. 3 zeigt: schematisch in Perspektive einen Verbinder eines erfindungsgemäßen Verbindungssystems.
- Fig. 3a zeigt: in Perspektive die Einzelheit Z von Fig. 3 stark vergrößert.
- Fig. 4 zeigt: schematisch in Perspektive einen Steckeinsatz eines erfindungsgemäßen Verbindungssystems.
- Fig. 4a zeigt: in Perspektive die Einzelheit Y von Fig. 4 stark vergrößert.
- Fig. 5 zeigt: in Perspektive analog zur Darstellung von Fig. 2 einen kreuzförmigen Verbinder eines erfindungsgemäßen Verbindungssystems mit vier gleichen eingesteckten Steckeinsätzen.
- Fig. 6 zeigt: in Perspektive analog zur Darstellung von Fig. 5 einen kreuzförmigen Verbinder eines erfindungsgemäßen Verbindungssystems mit vier unterschiedlichen eingesteckten Steckeinsätzen.

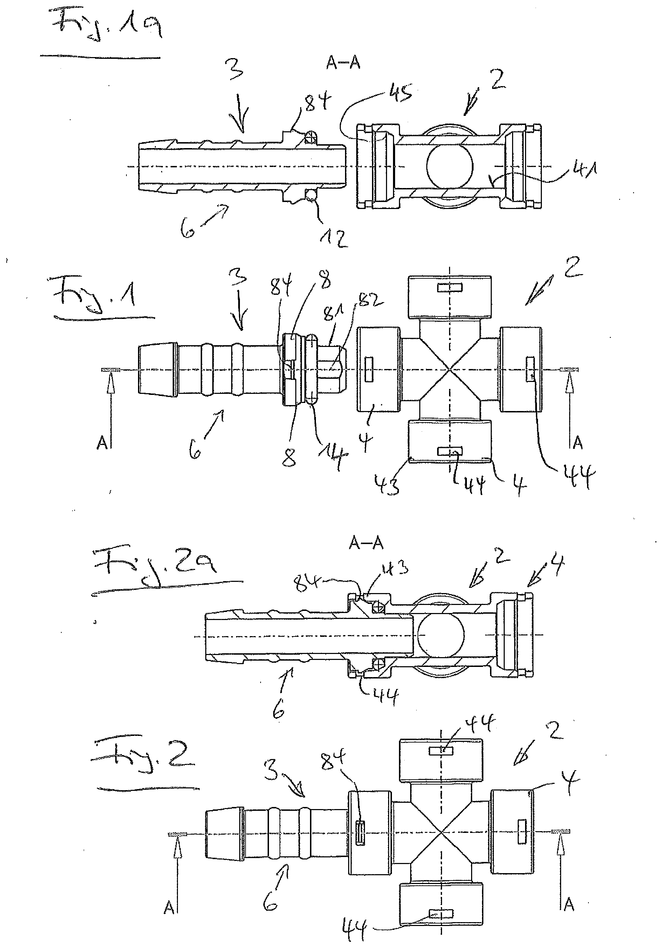

Fig. 1 zeigt auf der rechten Seite einen Verbinder 2 und auf der linken Seite einen mit diesem zur Verbindung bereitstehenden Steckeinsatz 3, dessen Nippel 8 zum Einschieben in eine Muffe 4 bereitsteht. Der Verbinder 2 ist hier ein sog. Kreuzverbinder mit vier Muffen 4, welche Ausnehmungen 44 tragen, in welche Vorsprünge 84 der Steckeinsätze 3 einrasten sollen. Der Vorsprung 84 des Steckeinsatzes 3 ist besser in Fig. 1a zu erkennen. Die weiterführende Darstellung in Fig. 1a zeigt dieselbe Situation wie in Fig. 1, jedoch im Schnitt. Man kann hier eine O-Ring- Dichtung 14 erkennen, der nach Einschub in die Muffe 4 des Verbinders 2 den Steckeinsatz 3 gegen die konusförmige Innenfläche der Muffe 4 abdichtet, siehe hierzu auch Fig. 2a.

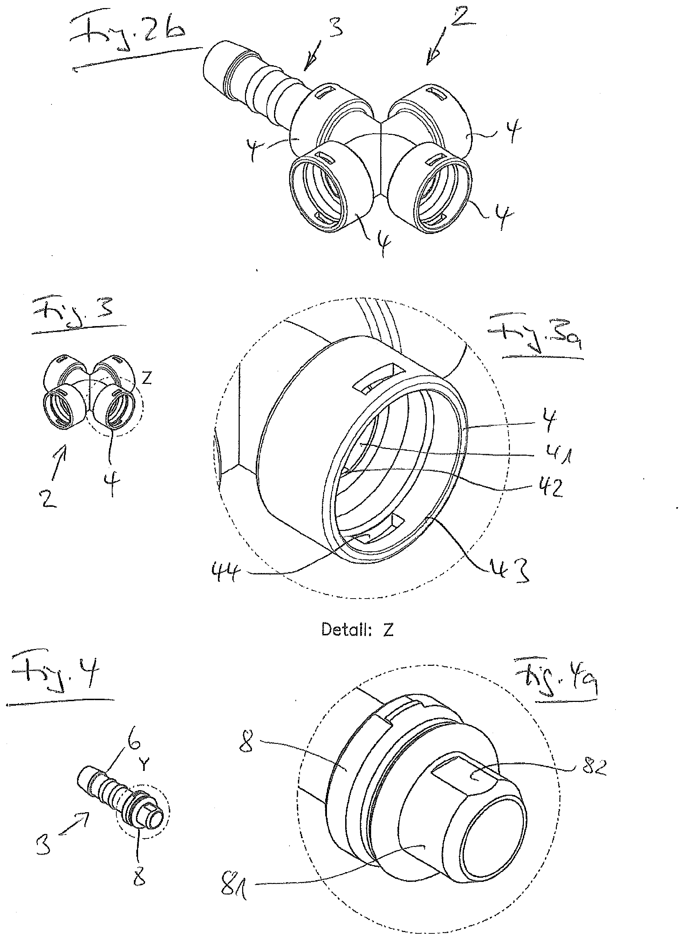

In Fig. 2a ist auch gut zu erkennen, wie der Vorsprung 84 nach Einschub in die Muffe 4, deren Kragen 43 während des Einschiebens des Nippels 8 in die Muffe 4 geringfügig radial nach außen ausweicht und nach Passieren des Vorsprungs 84 wieder in seine ursprüngliche Position zurückgeht, wonach der Vorsprung 84 in der Ausnehmung 44 der Muffe 4 eingerastet und bevorzugt nicht zerstörungsfrei lösbar verriegelt ist. Die Situation ist auch in Fig. 2 in Draufsicht dargestellt. Damit ist auch eine gewisse Verdrehsicherung des Steckeinsatzes 3 gegenüber dem Verbinder 2 realisiert. Eine wesentlich effektivere Verdrehsicherung besteht darin, dass der Nippel 8 mit seinem in die Muffe 4 gelangenden vorderen Ende eine kreisrunde Außenfläche 81 aufweist, die nur von einer Ausnehmung 82 unterbrochen ist. Siehe hierzu auch Fig. 4 und 4a. Beim Einstecken des Steckeinsatzes 3 in die Muffe 4 des Verbinders 2 ist der Steckeinsatz 3 so zu drehen, dass die Ausnehmung 82 mit dem Vorsprung 42 des Verbinders 2 fluchtet. Erfindungsgemäß können eine oder mehrere Ausnehmungen 82 und entsprechend ein oder mehrere Vorsprünge 42 vorgesehen sein, um eine stabile verdrehsichere Verbindung zu schaffen. Die Situation gemäß den Fig. 2 und 2a ist in Fig. 2b perspektivisch dargestellt.

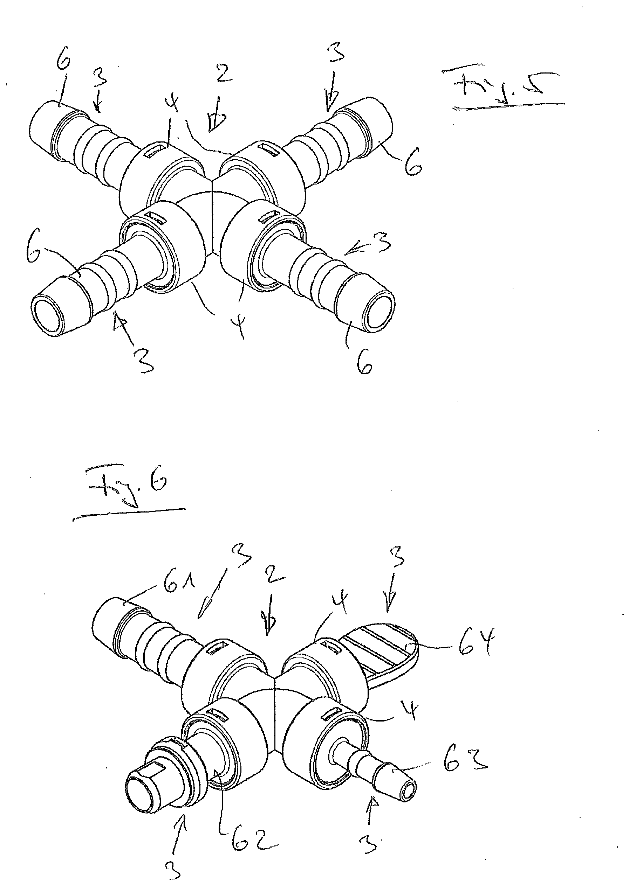

Fig. 5 zeigt eine ähnliche Situation mit vier Steckeinsätzen 3 mit gleichen Anschlüssen 6, eingesteckt in einen Verbinder 2, welcher vier Muffen 4 aufweist. Ausführungen der Verbinder 2 als Y- Verbinder oder T- Verbinder sind ebenfalls denkbar.

Sehr gut zu erkennen sind die vorteilhaften universellen Einsatzmöglichkeiten des erfindungsgemäßen Verbindungssystems in Fig. 6, in welcher ein Verbinder 2 mit vier verschiedenen Anschlüssen dargestellt ist. Beispielsweise ein Anschluss 61 für einen großen Schlauchdurchmesser, ein Anschluss 62 für einen Doppelnippel, für den Fall, dass hier ein weiterer Verbinder 2 eingesetzt werden soll. Des Weiteren ist in Fig. 6 ein Anschluss 63 mit einem Nippel für einen kleineren Schlauchdurchmesser, sowie ein Anschluss 64 für Blindstopfen dargestellt, im Falle, dass die entsprechende Muffe 4 nicht erforderlich ist.

Die für den individuellen Einsatz benötigten erfindungsgemäßen Steckeinsätze 3 werden vom Anwender bestimmt und eingesetzt. Im Einsatzfall wird, wie in Fig. 1a und 2a dargestellt ist, auf den Nippel 6 des ausgewählten Steckeinsatzes 3 eine O-Ringdichtung 14 geschoben und der Steckeinsatz 3 dann mit leichtem Druck in die Muffe 4 des Verteilers 2 eingeschoben, bis der Steckeinsatz 3 mit seinen Vorsprüngen 84 - es können einer oder mehrere Vorsprünge 84 und entsprechend eine oder mehrere Ausnehmungen 44 in der Muffe 4 vorgesehen werden - in die damit geschaffenen Rastfenster im Verbinder 2 einrastet. Nicht benötigte Muffen können, wie in Fig. 6 gezeigt ist, mit einem Anschluss mit Blindstopfen 64, bestückt und verschlossen werden. An jedem Verteileranschluss, sprich an jeder Muffe 4 des Verteilers 2 können alle verfügbaren Steckeinsätze 3, wie in Fig. 6 gezeigt ist, angeschlossen und kombiniert werden. Hierbei ist eine zusätzliche Sicherung nicht erforderlich. Auf die jeweiligen Anschlüsse 6 kann mit Ausnahme des Anschlusses mit Blindstopfen ein dem jeweiligen Anschluss entsprechendes Anschlussteil wie Schlauch oder Rohr oder Wellrohr gekoppelt werden, um ein gewünschtes durch das erfindungsgemäße Verbindungssystem ermöglichtes System zu schaffen.

Die in Fig. 6 gezeigten beispielhaft skizzierten Varianten von Steckeinsätzen können mehr oder weniger unendlich variiert werden, wobei zu jedem individuell wählbaren Anschluss 6 immer ein identischer Nippel 8 gehört. Dadurch sind die Steckeinsätze 3 in jeder gewünschten Muffe 4 einsetzbar.

Vorteilhafterweise werden die Steckeinsätze 3, gestaltet wie in Fig. 1a und 2a gut zu erkennen ist, mit einer O-Ringdichtung 14 versehen. Die Nase des jeweiligen Steckeinsatzes 3 wird dann in die Muffe 4 des Verteilers 2 gedrückt und über die Vorsprünge 84 und Ausnehmungen 44 fest verrastet. Hierbei drückt sich die O-Ringdichtung 14 gegen den wie in Fig. 1a gezeigten Konus 45 der Muffe 4 und dichtet den Steckeinsatz 3 gegen den Verteiler 2 ab.

In der Praxis hat sich gezeigt, dass das erfindungsgemäße System für Drücke bis zu 10 bar einsetzbar ist. Günstig hat sich auch der Einsatz für auf den Anschlüssen 6 anzubringende Schlauchgrößen von 3 bis etwa 12 mm gezeigt.

Im Inneren der Steckeinsätze 3 können z. B. auch Sensoren oder Messglieder zur Druckmessung o.ä. angeordnet werden.

### Bezugszeichen

- 2: Verbinder

- 3: Steckeinsatz

- 4: Muffe

- 41: Innenfläche

- 42: Vorsprung

- 43: Kragen

- 44: Ausnehmung

- 45: Konus

- 6: Anschluss
- 61: Anschluss für großen Schlauchdurchmesser
- 61: Anschluss für Doppelnippel
- 63: Anschluss für kleinen Schlauchdurchmesser
- 64: Anschluss für Blindstopfen

- 8: Nippel
- 81: Außenfläche
- 82: Ausnehmung
- 84: Vorsprung

- 14: O-Ringdichtung

## Patentansprüche

1. Verbindungssystem zur Verbindung von verschiedenen Schläuchen oder Rohren, aufweisend
- mindestens einen Verbinder (2), welcher wenigstens zwei Muffen (4) aufweist, und
- einer Vielzahl von Steckeinsätzen (3), welche Nippel (8) und Anschlüsse (6) aufweisen, wobei
die Nippel (8) eingerichtet sind, jeweils in eine der Muffen (4) des Verbinders (2) eingesteckt zu werden und die Nippel der Vielzahl von Steckeinsätzen (3) gleich ausgebildet sind,
die Anschlüsse (6) der Vielzahl von Steckeinsätzen (3) jeweils an die Anforderungen des jeweiligen Schlauches oder Rohres angepasst sind,
die Muffen (4) und die Nippel (8) der Vielzahl von Steckeinsätzen (3) einander zugeordnete Verdrehsicherungen und Dichtungselemente, vorzugsweise O-Ring-Dichtungen (14), aufweisen und
die Muffen (4) und die Nippel (8) der Vielzahl von Steckeinsätzen (3), zusätzlich zu den Verdrehsicherungen und Dichtungselementen einander zugeordnete nach dem Einstecken nicht zerstörungsfrei lösbare gegenseitige axiale Verriegelungen aufweisen, wobei
die Verdrehsicherungen der Vielzahl von Steckeinsätzen (3) derart ausgebildet sind, dass
die Muffen (4) im Wesentlichen kreisrunde Innenflächen (41) aufweisen, die jedoch durch wenigstens einen radial nach innen ragenden Vorsprung (42) unterbrochen sind und dass
die Nippel (8) im Wesentlichen kreisrunde Außenflächen (81) aufweisen, die jedoch durch wenigstens eine radial nach innen ragende komplementäre Ausnehmung (82) unterbrochen sind, wobei
der Vorsprung (42) in der komplementären Ausnehmung (82) zum Sitzen kommt und damit die jeweilige Verdrehsicherung bildet, wobei
die axialen Verriegelungen der Vielzahl von Steckeinsätzen (3) jeweils derart ausgebildet sind, dass die jeweilige Muffe (4) einen sich axial erstreckenden zylinderförmigen wenigstens teilweise elastischen Kragen (43) mit wenigstens einer sich radial erstreckenden Ausnehmung (44) aufweist und der jeweilige Nippel (8) wenigstens einen sich radial erstreckenden, vorzugsweise sägezahnförmig ausgebildeten, Vorsprung (84) aufweist, welcher beim Einstecken des Nippels (8) in die Muffe (4) in die Ausnehmung (44) des teilweise elastischen Kragen (43) gelangt, dort einrastet und damit die jeweilige axiale Verriegelung der Muffe (4) und des Nippels (8), bildet.

2. Verbindungssystem nach Anspruch 1, wobei der Verbinder (2) drei oder vier Muffen (4) aufweist.

3. Verbindungssystem nach Anspruch 1 oder 2, wobei der Verbinder (2) und / oder die Steckeinsätze (3) aus POM, PP, PA oder BT gefertigt ist / sind.

4. Verbindungssystem nach Anspruch 1, 2, oder 3, wobei die Anschlüsse (6) als Schlauchanschluss, Wellrohranschluss, Blindstopfen, Verbindungsrohr ausgebildet sind.

## Claims

1. Connection system for connecting different hoses or pipes, comprising
- at least one connector (2) which comprises at least two sockets (4), and
- a plurality of plug-in inserts (3) which comprise nipples (8) and connections (6), wherein
the nipples (8) are configured to be inserted into a respective one of the sockets (4) of the connector (2), and the nipples of the plurality of plug-in inserts (3) are formed identically,
the connections (6) of the plurality of plug-in inserts (3) are each adapted to the requirements of the respective hose or pipe,
the sockets (4) and the nipples (8) of the plurality of plug-in inserts (3) comprise mutually associated anti-rotation means and sealing elements, preferably O-ring seals (14), and
the sockets (4) and the nipples (8) of the plurality of plug-in inserts (3), in addition to the anti-rotation means and sealing elements, comprise mutually associated mutual axial locking means which, after insertion, cannot be released non-destructively, wherein
the anti-rotation means of the plurality of plug-in inserts (3) are configured such that
the sockets (4) comprise substantially circular inner surfaces (41) which, however, are interrupted by at least one projection (42) projecting radially inward, and that
the nipples (8) comprise substantially circular outer surfaces (81) which, however, are interrupted by at least one complementary recess (82) projecting radially inward, wherein
the projection (42) is seated in the complementary recess (82) and thereby forms the respective anti-rotation means, wherein
the axial locking means of the plurality of plug-in inserts (3) are each configured such that the respective socket (4) comprises an axially extending cylindrical, at least partially elastic collar (43) with at least one radially extending recess (44), and the respective nipple (8) comprises at least one radially extending projection (84), preferably in a saw-tooth shape, which, upon insertion of the nipple (8) into the socket (4), enters the recess (44) of the partially elastic collar (43), latches therein and thereby forms the respective axial locking means of the socket (4) and the nipple (8),

2. Connection system according to claim 1, wherein the connector (2) comprises three or four sockets (4).

3. Connection system according to claim 1 or 2, wherein the connector (2) and/or the plug-in inserts (3) is/are made of POM, PP, PA or BT.

4. Connection system according to claim 1, 2 or 3, wherein the connections (6) are formed as hose connection, corrugated pipe connection, blind plug or connecting pipe.

## Revendications

1. Système de raccordement pour raccorder différents tuyaux flexibles ou tubes, comprenant
- au moins un raccord (2) qui comprend au moins deux douilles (4), et
- une pluralité d'inserts enfichables (3) qui comprennent des embouts (8) et des raccordements (6), dans lequel
les embouts (8) sont configurés pour être insérés dans une douille respective des douilles (4) du raccord (2), et les embouts de la pluralité d'inserts enfichables (3) sont formés de manière identique,
les raccordements (6) de la pluralité d'inserts enfichables (3) sont chacun adaptés aux exigences du tuyau flexible ou du tube respectif,
les douilles (4) et les embouts (8) de la pluralité d'inserts enfichables (3) comprennent des moyens anti-rotation et des éléments d'étanchéité associés les uns aux autres, de préférence des joints toriques (14), et
les douilles (4) et les embouts (8) de la pluralité d'inserts enfichables (3), en plus des moyens anti-rotation et des éléments d'étanchéité, comprennent des moyens de verrouillage axial mutuel associés les uns aux autres qui, après insertion, ne peuvent être libérés de manière non destructive, dans lequel
les moyens anti-rotation de la pluralité d'inserts enfichables (3) sont configurés de sorte que
les douilles (4) comprennent des surfaces intérieures sensiblement circulaires (41) qui sont toutefois interrompues par au moins une saillie (42) faisant saillie radialement vers l'intérieur, et que
les embouts (8) comprennent des surfaces extérieures sensiblement circulaires (81) qui sont toutefois interrompues par au moins un évidement complémentaire (82) faisant saillie radialement vers l'intérieur, dans lequel
la saillie (42) est logée dans l'évidement complémentaire (82) et forme ainsi le moyen anti-rotation respectif, dans lequel
les moyens de verrouillage axial de la pluralité d'inserts enfichables (3) sont chacun configurés de sorte que la douille respective (4) comprenne un collier cylindrique s'étendant axialement, au moins partiellement élastique (43) avec au moins un évidement s'étendant radialement (44), et l'embout respectif (8) comprenne au moins une saillie s'étendant radialement (84), de préférence en forme de dent de scie, qui, lors de l'insertion de l'embout (8) dans la douille (4), entre dans l'évidement (44) du collier partiellement élastique (43), s'y encliquette et forme ainsi le moyen de verrouillage axial respectif de la douille (4) et de l'embout (8).

2. Système de raccordement selon la revendication 1, dans lequel le raccord (2) comprend trois ou quatre douilles (4).

3. Système de raccordement selon la revendication 1 ou 2, dans lequel le raccord (2) et/ou les inserts enfichables (3) est/sont réalisé(s) en POM, PP, PA ou BT.

4. Système de raccordement selon la revendication 1, 2 ou 3, dans lequel les raccordements (6) se présentent sous la forme d'un raccordement de tuyau flexible, d'un raccordement de tube ondulé, d'un bouchon d'obturation ou d'un tube de raccordement.
